# EUROPEAN PATENT SPECIFICATION

(11) **EP 1 631 465 B1**
(45) Date of publication and mention of the grant of the patent: **05.09.2007**
(21) Application number: 03738015.1
(22) Date of filing: 12.06.2003
(51) Int. Cl.: B60C 23/04, B29D 30/06

(54) **TYRE EQUIPPED WITH A MONITORING DEVICE, AND METHOD FOR INSTALLING THE DEVICE ONTO THE INNER SURFACE OF THE TYRE**
REIFEN MIT EINER ÜBERWACHUNGSEINRICHTUNG, UND METHODE ZUR BEFESTIGUNG DIESER AUF DER REIFEN-INNENSCHICHT
PNEUMATIQUE EQUIPE D'UN DISPOSITIF DE SURVEILLANCE, ET PROCEDE D'INSTALLATION DE CE DISPOSITIF SUR LA SURFACE INTERNE DU PNEUMATIQUE

(43) Date of publication of application: 08.03.2006
(73) Proprietor: Pirelli Tyre S.p.A., 20126 Milano (IT)
(72) Inventor: MANCOSU, Federico c/o Pirelli Pneumatici S.p.A., I-20126 Milano (IT); SERRA, Antonio c/o Pirelli Pneumatici S.p.A., I-20126 Milano (IT); NAHMIAS NANNI, Marco c/o Pirelli Pneumatici S.p.A., I-20126 Milano (IT); FESTA, Franco c/o Pirelli Pneumatici S.p.A., I-20126 Milano (IT)
(74) Representative: Giannesi, Pier Giovanni
(86) International application number: PCT/EP2003/006141
(87) International publication number: WO 2004/110794

(56) References cited:
- EP-A- 0 689 950
- EP-A- 0 829 382
- EP-A- 0 924 112
- EP-A- 1 070 580
- US-B1- 6 462 650

## Description

The present invention relates to a tyre equipped with a monitoring device, and to a method for installing the monitoring device, for example a device which includes a pressure sensor and/or a temperature sensor, onto the inner surface of the tyre.

Nowadays it is strongly felt the need of monitoring the conditions of a tyre during use on a motor vehicle, by determining characteristic parameters of the tyre which represent its operating state, both in static conditions and, especially, during the running of the vehicle.

One parameter of the tyre which can be monitored is the inflation pressure. A tyre which is not correctly inflated can result in increased fuel consumption, impairment of the manoeuvrability of the vehicle, and irregular wear of the tyre, just to name only the most important problems. Systems have therefore been developed to monitor the inflation pressure of tyres during use, these systems informing the driver of any decrease in pressure and the consequent need to re-establish optimal conditions in order to avoid the problems mentioned above.

Another parameter which can yield very important information on the state of the tyre during use is the temperature in the inner volume of the tyre occupied by the inflation air. An anomalous rise in temperature is a signal of the presence of critical operating conditions, which may result in irreversible damage to the tyre.

For example, patent US-5,540,092 describes a system for monitoring the inflation pressure in a tyre, comprising a pressure measurement unit and a unit for transmitting an encoded signal to the vehicle on which the tyre is fitted. The transmitting unit can be fitted inside or outside the tyre. The said encoded signal is transferred by inductive coupling between the transmission unit and a fixed antenna. This transmission unit is battery-powered.

Patent US-5,900,808 describes a system for monitoring the internal pressure of a tyre, comprising battery-powered sensor means and a radio-frequency transmitter for transmitting the signal generated by the said sensor means to a receiver. The system also comprises switching means for enabling the power supply to the transmitter when the sensor means signal a condition of low pressure in the tyre. Battery life is extended because the transmitter is supplied with power only when a signal has to be transmitted to the receiver. The sensor means associated with the transmitter are fitted in the wheel rim by suitable attaching means before the tyre is installed and inflated.

Patent US-5,562,787 describes a method for monitoring a tyre of a vehicle during use, for example by measuring the pressure and temperature of the air inside the tyre, or the number of revolutions of the wheel, or additionally for transmitting information identifying the said tyre. The method uses a programmable self-powered device which is fitted on the inner surface of the tyre or inserted into the wall of the wheel rim. The device comprises a power source which can be put into an active or an inactive state by means of a switch device, a sensor for monitoring the aforesaid information, an integrated circuit, an amplifier and an antenna. A transceiver located on the vehicle or in a remote position interrogates the programmable self-powered device, which replies with a radio-frequency signal containing the required information. The programmable self-powered device is activated by the said remote transceiver which operates the switch device which puts the power source into the active state. The device can be located on the inner surface of the tyre next to the fixing bead wires, in a radially inner position with respect to the turn-up edge of the casing, or in the crown area of the tread. The device can be encapsulated in a rigid or semi-rigid container with a protective function, consisting for example of a cross-linked elastomeric material having a Shore A hardness in the range from 50 to 100 and a Shore D hardness in the range from 5 to 80. To secure the device, encapsulated in this way, to the inner surface of the tyre, a covering layer is used, including flexible rubbers, for example natural rubber or synthetic diene rubbers (for example synthetic polyisoprene, polybutadiene, styrene-butadiene copolymers and the like), having a Shore A hardness in the range from 50 to 95. The covering layer is provided with an aperture allowing the pressure sensor to measure the internal pressure of the tyre. The device can be located within a recess formed in the inner surface of the tyre, for example by inserting a Teflon^{®} matrix in the liner of the green tyre. The covering layer can be vulcanized together with the green tyre or can be stuck to the inner surface of the finished tyre with a suitable adhesive.

Patent US-6,217,683 describes a tyre provided with a module for monitoring and/or storing information relating to the said tyre, wherein the said module is fixed on the inner surface of the tyre by a fixing system which comprises a rubber support fastened at one end to the inner surface of the tyre and at the other end to the module by means of a mechanical connection. This connection consists of two parts, namely a first part connected to the rubber support and a second part connected to the module, which interact in order to fix the said module stably to the inner surface of the tyre. The fixing system can also include a spacer element for keeping the module sufficiently far away from the inner surface of the tyre, in order to avoid damage due to the bending stresses generated within the tyre during use. The fixing system provided in this way allows the module to be removed for replacement, repair or reprogramming.

Patent application WO 99/29524 describes a pressure sensor for a tyre which is encapsulated in an elastomeric material (preferably natural rubber) which adheres to the inner surface of the tyre, preferably in the proximity of the equatorial plane of the tyre. Means are also provided for ensuring the establishment of an equilibrium pressure between the sensor and the internal space of the tyre. The sensor encapsulated in the elastomeric material is fixed to the inner surface of the tyre by means of an adhesive or by the insertion of the encapsulated sensor during the manufacture of the tyre.

Patent application EP-1,006,010 discloses a method for connecting a monitoring device to the inner surface of a tyre so as to maintain the connection and prevent damages to the device when the tyre experiences predictable rotational and shock forces, especially when the tyre contacts bumps or surface irregularities. The method comprises attaching the device to the inner liner of the tyre by means of an adhesive having a high viscosity at room temperature and capable of curing at 100°C and lower, the inner liner having a thickness of at least 0.06 inch. A suitable adhesive is an epoxy adhesive consisting essentially of epoxy and amine having a ratio of 2.5 parts epoxy to one part amine curative. Before application of the adhesive, the selected portion of the inner liner is roughened to improve adhesion. After application of the adhesive onto the roughened portion, the device is superimposed and held in place by a suitable device (e.g. a clamp or a piece of tape). The adhesive is allowed to cure for 16 to 24 hours. The resulting cured adhesive is substantially rigid. Therefore the above adhesive attachment system properly functions when the inner liner is thick enough to prevent breaking of the rigid bond between sensor and tyre, such as in off-the-road tyres and many truck and bus tyres.

Patent application EP-1,078,780 describes a method and apparatus for inserting an electronic device into a tyre and removing it therefrom. This apparatus comprises a cross-linked rubber element having a first face shaped in such a way as to create a recess of specified shape and a second face, opposed to the first, having a profile shaped to be complementary to the inner profile of the tyre. The cross-linked rubber element can be inserted into the tyre during the manufacture of the tyre and then cross-linked "in situ", or can be assembled in the tyre after the tyre and the rubber element have been vulcanized separately. When the cross-linked rubber element has been fixed to the inner surface of the tyre, the sensor, having been previously encapsulated in a rigid material, is inserted into the recess present in the cross-linked rubber element and fixed by suitable removable fixing means. Thus the sensor can be inserted into the tyre in a removable way, to enable replacement, repair or other operations to be carried out on the said sensor.

Patent application EP-1,070,580, corresponding with the preamble of claims 1, 15 and 16, respectively, describes a method of attaching an article (3) to the inside surface (S) of a pneumatic tyre characterized by coating an area of the inner surface of an uncured tyre carcass with a first layer (1) of adhesive, covering the first layer (1) of adhesive with a removable masking layer (M) comprising a flexible and heat resistant material, curing the tyre carcass in a heated tyre mould, removing the cured tyre from the mould and removing the masking layer (M) to expose the first layer (1) of adhesive, coating a face of the article (3) with a second layer of adhesive (2) and attaching the article to the tyre by bringing together the first (1) and second (2) layers of adhesive. In particular, a method by which a microchip may be conveniently and securely attached to the inner surface of a tubeless pneumatic tyre for the purpose of monitoring its operating parameters, is described.

The Applicant has faced the problem of providing a method for installing a monitoring device into a tyre that can be carried out in a simple and secure way on the finished tyre, for example during the stage of fitting the tyre onto the rim, without requiring special intervention during the manufacture of the tyre, and without making modifications to other parts of the wheel, for example to the inflation valve or the wheel rim.

The Applicant has perceived that the above goal can be achieved by securing the monitoring device onto the inner surface of the finished tyre. In this respect, the Applicant has further perceived that a secure and stable connection between the tyre and the monitoring device can be achieved by improving the reliability of the mechanical connection between the monitoring device, which is rigid, and the tyre, which flexes during use in response to various mechanical stresses.

The Applicant has found that the above problem can be solved by interposing, between the inner surface of the tyre and the monitoring device, at least one layer of a damping material having a reduced hardness and a selected elastic rebound as defined hereinbelow. The presence of the damping material secures the bonding of the monitoring device to the inner surface of the tyre by minimizing the mechanical stresses exerted onto the bonding surface during use of the tyre. On the other hand, the damping material avoids damages to the monitoring device by preventing transmission of the above stresses to the device.

Therefore, according to a first aspect the present invention relates to a tyre having an inner surface of a substantially toroidal shape and provided with at least one monitoring device adhered to the inner surface of the tyre, wherein a damping element is interposed between the at least one monitoring device and the inner surface of the tyre, said damping element comprising at least one layer of a resilient material having a Shore A hardness (measured at 23°C according to ASTM Standard D2240) of from about 1 to about 40, and an elastic rebound (measured at 23°C according to ASTM Standard D1054) lower than about 60.

Preferably, the resilient material has a Shore A hardness of from about 5 to about 35.

Preferably, the resilient material shows an elastic rebound lower than about 50. Preferably, the elastic rebound is not lower than 10.

According to a preferred embodiment, at least a first adhesive layer is interposed between the inner surface of the tyre and the damping element.

According to a preferred embodiment, at least a second adhesive layer is interposed between the damping element and the monitoring device.

According to a preferred embodiment, the damping element further comprises at least a protective layer which at least partially covers the at least one layer of resilient material.

According to further aspect, the present invention relates to a method for installing a monitoring device on a tyre having an inner surface of substantially toroidal shape, the method comprising:
selecting a portion of the inner surface of the tyre where the monitoring device is intended to be installed;
adhering the monitoring device to the selected portion;
wherein a damping element comprising at least one layer of a resilient material is interposed between the inner surface of the tyre and the monitoring device.

The portion of the inner surface on which the monitoring device is installed may be advantageously selected in an area where the flexural stresses of the tyre are relatively low. Particularly preferred is a portion in correspondence of a crown area of the tyre, preferably in the proximity of the equatorial plane of the tyre. Alternatively, the monitoring device may be installed on a portion of the inner surface in correspondence of a bead area of the tyre.

According to another aspect the present invention relates to a kit for installing a monitoring device onto an inner surface of a tyre, comprising:
the monitoring device; and
a damping element to be interposed between the monitoring device and the inner surface of the tyre, said damping element comprising at least one layer of a resilient material having a Shore A hardness (measured at 23°C according to ASTM Standard D2240) of from about 1 to about 40, and an elastic rebound (measured at 23°C according to ASTM Standard D1054) lower than about 50.

In the present description and in the claims, with the term "monitoring device" it is meant any electrical, electronic or piezoelectric device capable of measuring and/or processing and/or storing and/or transmitting to the exterior (for example to a fixed unit present on the vehicle or positioned at a point through which the said vehicle passes) at least one characteristic parameter of the tyre, in a digital or an analogic form. The characteristic parameter may be an instantaneous value or a time-mediated value, and may relate to:
operating conditions of the tyre, for example the internal inflation pressure or the internal temperature of the tyre or of any of its parts (see for example patents US-5,540,092, US-5,900,808 and US-5,562,787);
data relating to a dynamic behaviour of the tyre, for example acceleration or displacement of any point of the tyre in at least one direction selected from centripetal, longitudinal and lateral direction (see for example patents EP-887,211, WO 01/36241 and US-6,204,758);
data relating to forces of interaction between the bead and the rim; and
tyre identification data, such as data on manufacture or uniformity (see for example patent US-6,217,683).

Therefore the monitoring device can include at least one sensor for measuring at least one characteristic parameter of the tyre (for example, a pressure sensor, a temperature sensor, an accelerometer, a movement sensor or a velocity sensor), or an electronic memory which contains data identifying the tyre (for example, a chip or a transponder).

A monitoring device useful for the present invention may include an antenna for transmitting the measured characteristic parameter. The antenna is electrically connected to the sensor.

The antenna may be a linear dipole or monopole formed by a conductor, e.g. a conductive film including a conductive metal, such as copper. Preferably, the antenna has its major geometrical axis crossing the circumferential direction of the tyre.

The conductor forming the antenna may be laid onto an insulating material which can be the same material employed for the damping layer of the present invention. A layer of conductive material may be provided in radially external position with respect to the insulating material. Structures of the tyre, such as metallic carcass or belt elements or a layer of conductive vulcanised rubber, may perform the function of said layer of conductive material.

Examples are illustrated in the patent applications WO01/74609 and WO99/29522.

The dimensions of the damping element are selected essentially according to the dimensions and weight of the monitoring device to be installed. Generally, the width and length of the damping element are sufficient to cover a lower surface of the device to be fixed to the tyre, while the thickness is generally of from 0.5 mm to 10 mm, preferably from 1 mm to 5 mm.

The method according to the present invention can be applied to tyres of any type and can advantageously be implemented by the user while worn tyres are being replaced with new tyres. This is because the operation of inserting the device into the tyre can be performed in a simple and rapid way and does not have to be carried out by specialist personnel.

Further characteristics and advantages will appear from the detailed description of preferred, but not limitative, embodiments of the present invention.

This description is given below with reference to the attached drawings, wherein:
Figure 1 shows a cross section of a tyre fitted on its supporting rim, with a monitoring device fitted on the internal surface of the tyre according to the invention;
Figure 2 shows a block diagram of a fixed unit located on the vehicle and connected by a radio-frequency link to the said device;
Figure 3 shows a embodiment of the electronic part of the device according to the invention (as a block diagram);
Figure 4a shows a side view of an embodiment of the device according to the invention;
Figure 4b shows a plan view of an embodiment of the device according to the invention; and
Figure 5 shows a side view of another embodiment of the device according to the invention.
Figure 6 illustrates an axonometric view of a tyre according to the invention equipped with a monitoring device including a sensor and an antenna

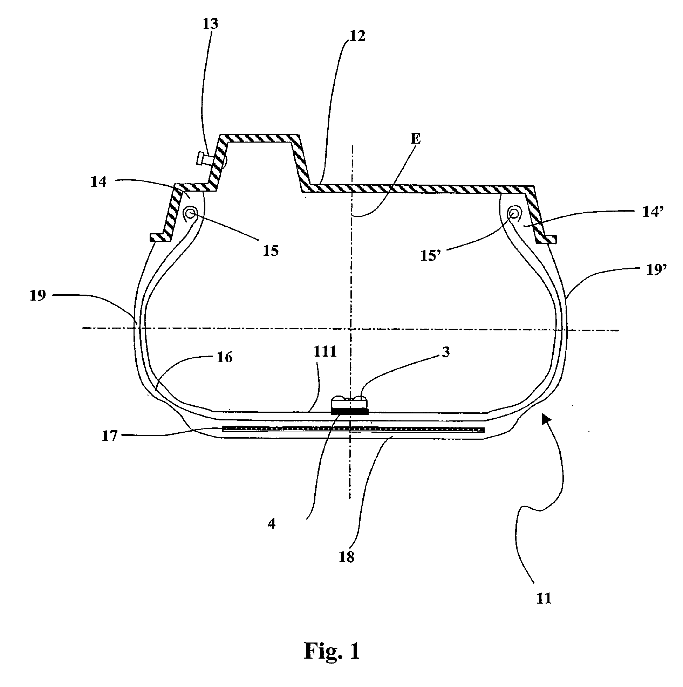

Figure 1 shows a wheel comprising a tyre 11, of the type conventionally known as "tubeless", in other words without an inner tube, and a supporting rim 12. This tyre is inflated by means of an inflation valve 13 positioned, for example, on the channel of the said rim.

The tyre 11, of which Fig. 1 is a schematic representation, has an internally hollow toroidal structure formed by a plurality of components. A textile or metallic carcass structure 16 has two beads 14 and 14', each formed along an inner circumferential edge of the carcass structure 16 for fixing the tyre 11 to the corresponding supporting rim 12 of the wheel. Each of the beads 14 and 14' comprises at least one annular reinforcing core 15 and 15', known as bead wire.

The carcass structure 16 is formed by at least one reinforcing ply which includes textile or metallic cords extending axially from one bead 14 to the other 14' in a toroidal profile, and which has each of its ends associated with a corresponding bead wire 15 and 15'. In radial tyres the aforesaid cords lie essentially on planes containing the axis of rotation of the tyre.

On the crown area of the carcass structure 16 an annular structure 17 is positioned, known as belt structure, normally consisting of at least one layer of metallic or textile cords embedded in an elastomeric material. Usually the belt structure 17 comprises two belt strips (not represented in Fig. 1) which incorporate a plurality of reinforcing cords, typically metal cords, which are parallel to each other in each strip and intersecting with respect to the adjacent strip, orientated so as to form a predetermined angle with respect to a circumferential direction. At least one additional reinforcing layer (not represented in Fig. 1) may be optionally applied to the radially outermost belt strip, said additional layer incorporating a plurality of reinforcing cords, typically textile cords, arranged at an angle of a few degrees with respect to a circumferential direction, covered and joined together by means of an elastomeric material.

In a radially external position with respect to the belt structure 17, a tread band 18 is applied, made from an elastomeric material and usually having on the radially outermost surface a tread pattern for the rolling contact of the tyre with the road.

Two sidewalls 19 and 19' of elastomeric material, each extending radially outwards from the outer edge of the corresponding bead 14 and 14', are also placed on the carcass structure in axially opposed lateral positions.

In tyres of the type known as "tubeless", the inner surface of the tyre is normally covered with a liner 111, namely at least one layer of air-tight elastomeric material. Finally, the tyre may comprise other known elements, e.g. additional reinforcing elements, rubber fillers, etc., according to the specific design of the tyre.

The system for monitoring the tyre usually comprises, in general terms, a fixed unit 2, preferably located on the vehicle to which the tyre is fitted, and a moving unit 3 (namely the monitoring device including the sensor) associated with the tyre.

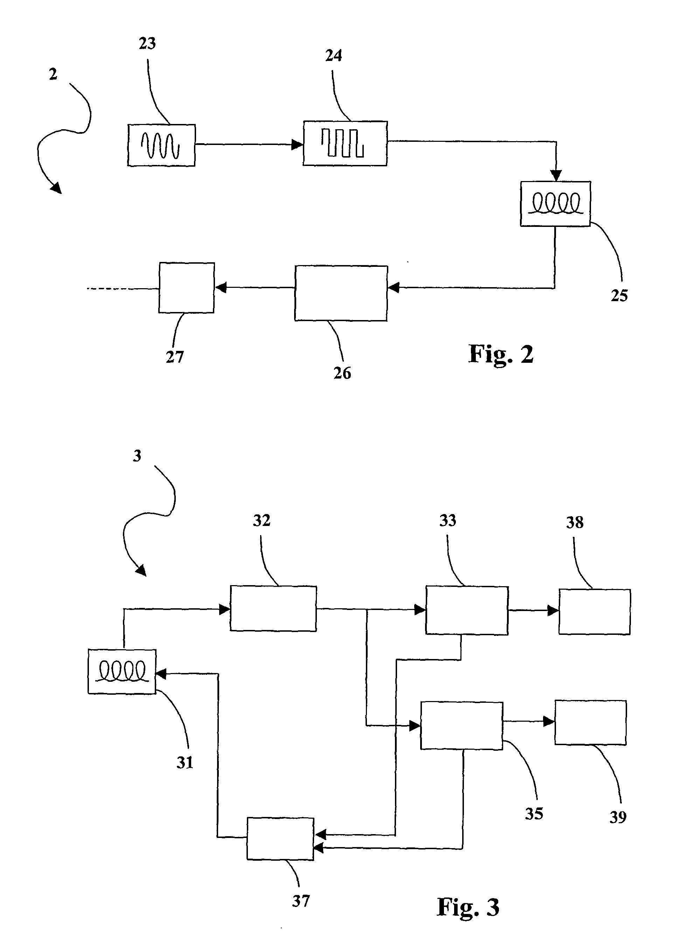

Figure 2 shows a block diagram of the said fixed unit 2, preferably comprising a device for transmitting to the said moving unit and a device for receiving from the said moving unit.

The transmission device preferably comprises an oscillator circuit 23, which supplies a driver circuit 24 for a first antenna 25, referred to below as the fixed antenna.

The receiving device comprises a radio-frequency receiver 26 connected to the said antenna, and preferably also an electrical demodulator device 27.

Preferably, the electrical energy required to power the said fixed unit can be supplied directly by the vehicle battery through a suitable driver circuit (not shown). Advantageously, the said fixed unit also communicates with a device for displaying the said measured parameters, located on board the vehicle. For example, the inflation pressure can advantageously be displayed on the dashboard of the vehicle, on a suitable display unit.

The said moving unit 3, shown in Figure 3, comprises in general terms a device for transmission to the said fixed unit and a device for measuring at least one characteristic parameter of a tyre.

Preferably, the said moving unit is supplied by a battery located within it and is provided with a device to enable power to be supplied to the said device for measuring characteristic parameters of the tyre when the tyre is rolling.

The moving unit can also contain a self-powering device, which generates electricity as a result of the stresses to which the said moving unit is subjected (for example, the variations of centrifugal force or the deformations of the liner).

Alternatively, the said moving unit is supplied by the said fixed unit by means of a device for receiving from the said fixed unit. This device for receiving from the said fixed unit preferably comprises a second antenna 31, referred to below as the moving antenna, connected to an electrical energy storage circuit 32.

The measuring device preferably comprises at least one driver circuit or encoder/decoder circuit for at least one measuring sensor for at least one characteristic parameter of the tyre. In particular, the example in Figure 3 shows two driver circuits 33 and 35 for two sensors 38 and 39, namely a first sensor 38 for measuring the inflation pressure of the tyre and a second sensor 39 for measuring the temperature inside the tyre. Alternatively, a single driver circuit encodes and/or decodes the pressure and/or temperature signal generated by a single sensor.

These sensors can be sensors for measuring an absolute value of pressure or temperature, or can be threshold sensors, in other words those which signal a departure from a previously specified threshold value of pressure and/or temperature.

Within this moving unit, the pressure and temperature signals can be suitably encoded for their transmission outside the tyre; for example, they can be associated with an identification code of the tyre, in order to prevent confusion with similar signals originating from other tyres of the vehicle.

The device for transmission to the said fixed unit comprises a reading circuit 37, which is connected to the said moving antenna 31 and which can receive signals associated with the said sensors from the said at least one driver device.

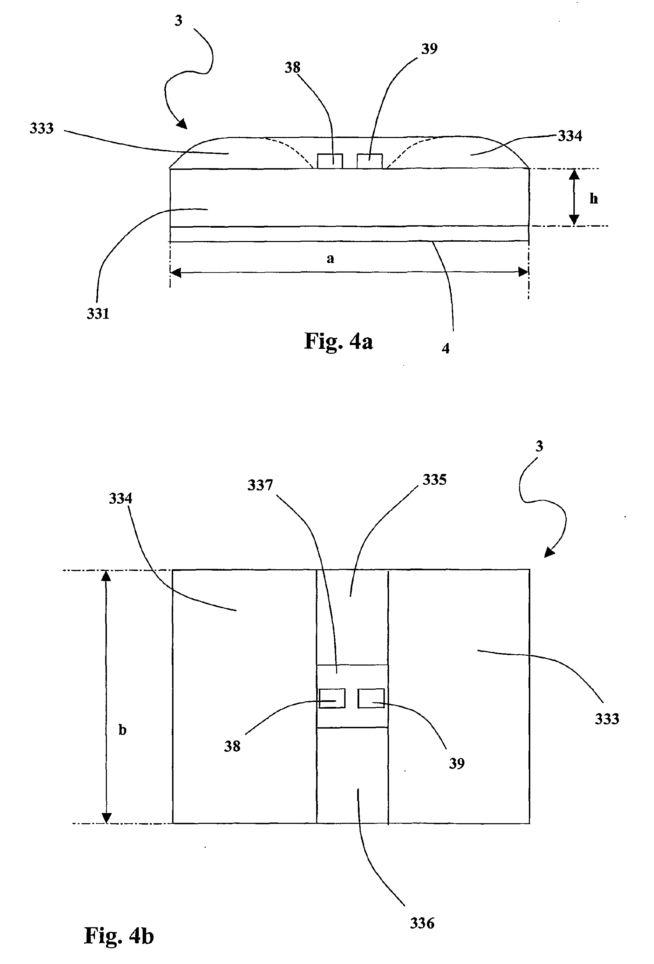

A possible structure of the device according to the invention is shown in Figures 4a and 4b. In particular, the device comprises, in general terms, a substrate 331, on which electrical connections and electrical components for the aforesaid receiving and transmitting devices are provided, for the said moving antenna and for the sensors. Preferably, these sensors 38 and 39 are, in turn, fixed to or integrated in the substrate 331. For example, in Figure 4a these sensors 38 and 39 are fixed to the upper surface of the substrate 331, being placed preferably in a central position. Additionally, substantially all of the electrical components of the device can be formed on the substrate 331 by an integrated technology. The substrate 331 is preferably of parallelepipedal shape with a length a, width b, thickness or height h in Figures 4a and 4b. Alternatively, the substrate 331 is of essentially cylindrical shape and the sensors are placed on one of the two end surfaces.

The substrate 331 is associated with a damping element 4 according to the invention, which extends preferably over the whole lower surface of the substrate 331. The damping element 4 can be associated with the substrate 331 by adhesion, thanks to the adhesive properties of the resilient material included in the damping element 4 or by the interposition of an adhesive element. The association between the damping element 4 and the substrate 331 can also be provided by mechanical means (not shown in the figures).

A first pair of protective elements 333 and 334, whose length is preferably equal to the length of the substrate, is placed on the upper surface of the substrate, together with a second pair of protective elements 335 and 336, fitted one opposite the other between the said first pair of protective elements 333 and 334.

Thus, in the example in Figures 4a and 4b, the whole upper surface of the substrate 331 is protected except for a central area 337 in which the said sensors 38 and 39 are placed. These protective elements on the upper surface of the substrate 331 essentially have the function of providing mechanical protection for the sensors 38 and 39, and are essentially electromagnetically inert, so that they do not impede in any way either the process of receiving and transmitting information or the process of receiving electrical energy. The materials from which they are made can also be electrically insulating and can act additionally as electrical protection for the circuits on the substrate 331. In particular, the protective material prevents the possibility of creation of short circuits between the individual electronic components present on the faces of the device.

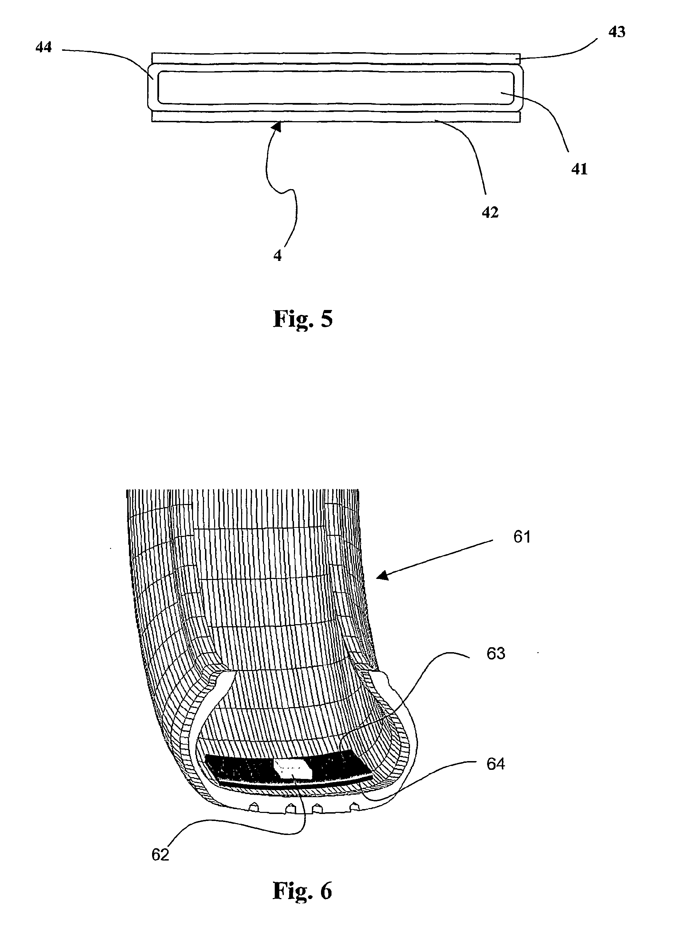

In Fig. 5 a preferred structure of the damping element 4 is represented. The damping element 4 comprises a layer of resilient material 41 according to the invention, as further illustrated hereinbelow. The layer of the resilient material 41 may be at least partially covered by a protective layer 44, which has the function of protecting the resilient material, which is soft and tacky, from mechanical damages during use, particularly during installation of the monitoring device into the tyre, which can impair the integrity of the damping element by causing cuttings, abrasions and/or tearings.

As represented in Fig. 5, the protective layer 44 may completely encase the layer of the resilient material 41, or, alternatively, may cover only the surfaces of the layer 41 which may come into contact with the exterior.

The protective layer 44 generally have high traction resistance, particularly a value of stress at break of at least 30 MPa, preferably of at least 40 MPa, and a value of elongation at break of at least 400%, preferably of at least 500%. Preferably, said layer shows low load values, usually lower than 10 MPa, up to an elongation of about 300%, said values abruptly increasing beyond such threshold.

In other words, at low elongation percentage, the protective layer material behaves substantially like the resilient material, thus not interfering with its damping function. At high elongation percentage, where the resilient material can suffer damages, the high load values shown by the protective layer material enable it to provide mechanical protection against bumps and tearings.

Materials useful as protective layer can be selected from the same class of polymeric material used for resilient material. For example, in the presence of a polyurethane-based resilient material, a cross-linked polyurethane protective layer may be advantageously employed.

On a first surface of the damping element 4 a first adhesive layer 42 may be provided to connect the damping element 4 to the inner surface of the tyre. Moreover, on a second surface of the damping element 4 a second adhesive layer 43 may be provided to connect the damping element 4 to the monitoring device.

For the adhesive layers 42 and 43 any suitable adhesive means may be used. Preferably the adhesive layers are formed by a flexible adhesive material, e.g. a polyurethane adhesive such as Araldite^{®}2040 (Vantico Inc., USA). Preferably, the adhesive layers 42 and 43 comprise a double sided adhesive tape consisting of a polyester tape coated with an acrylic adhesive on both sides, such as the adhesive tape Scotch^{®} 300SL HI Strength, marketed by 3M.

The resilient material forming the layer 41 may be a crosslinked elastomeric material having the properties as recited above and may be selected from:
(a) polyurethane gel materials, obtained by reacting at least one polyisocyanate, preferably a diisocyanate (e.g. diphenylmethane diisocyanate, toluene diisocyanate, etc.) with at least one polyether polyol, preferably a polyether diol (e.g. polytetramethylene ether glycol, polyoxypropylene glycol, etc.), and with a chain extender, e.g. an aliphatic diol such as 1,4-butanediol, usually in the presence of a catalyst (e.g. an organometallic compound such as a tin tertiary amine compound);
(b) cross-linked diene elastomers.

Preferably the cross-linked diene elastomers is obtained by cross-linking an elastomeric composition comprising:
100 phr of at least one cross-linkable elastomer;
from 20 to 100 phr, preferably from 30 to 70 phr, of at least one plasticizing oil;
from 20 to 150 phr, preferably from 40 to 100 phr, of at least one reinforcing filler;
from 0 to 80 phr, preferably from 0 to 60 phr, of at least one low molecular weight amorphous polymer (preferably a low molecular weight homologue of the elastomer).
(phr = parts by weight per 100 parts of polymer base).

An example of a cross-linking system that may be used is:
(i) from 0.3 to 12 phr, preferably from 0.5 to 8 phr, of at least one organic peroxide; or
(ii) from 0.1 to 5 phr, preferably from 0.2 to 3.5 phr, of sulphur (or equivalent quantity of a sulphur donor), and
(iii)from 2 to 10 phr, preferably from 3 to 8 phr, of at least one vulcanization accelerator.

The cross-linkable elastomer is generally a high molecular weight amorphous polymer, with an average molecular weight of not less than 150,000, preferably from 200,000 to 3 million, and can be selected, for example, from: natural rubber (NR), synthetic polyisoprene, epoxidized natural rubber (ENR), polybutadiene (BR), polychloroprene, acrylonitrile-butadiene copolymer (NBR), butyl rubber (IIR), halobutyl rubber (XIIR) (particularly chlorobutyl rubber or bromobutyl rubber), styrene-butadiene copolymer (SBR), styrene-isoprene copolymer, styrene-isoprene-butadiene terpolymer, ethylene-propylene copolymers (EPR), ethylene/propylene/diene copolymers (EPDM), polyisobutene, or mixtures thereof. If the cross-linking agent is an organic peroxide, the elastomeric material preferably does not comprise polyisobutene or butyl rubber (IIR).

The plasticizing oil can be selected from: mineral oils, vegetable oils, and synthetic oils, for example aromatic oils, naphthenic oils, phthalates, soybean oil, epoxidized soybean oil, or mixtures thereof.

The reinforcing filler can be selected from carbon black, silica, alumina, aluminosilicates, calcium carbonate, kaolin, or mixtures thereof.

The low molecular weight amorphous polymer which may be present has a mean molecular weight which is preferably less than 150,000, preferably from 500 to 100,000, and can be selected from: depolymerized natural rubber, liquid synthetic polyisoprene, liquid polybutadiene, liquid polybutene, liquid ethylene/propylene/diene copolymers, liquid butyl rubber, or mixtures thereof.

The cross-linkable elastomeric material may also contain other conventional components such as antioxidants, protective agents, adhesion resins, and co-crosslinking agents.

The organic peroxide can be selected from those having a half-life greater than 5 minutes at 80°C, for example cumyl peroxyneodecanoate, tert-amyl peroxypivalate, and dichlorobenzoyl peroxide.

If the cross-linking system is sulphur-based, the cross-linking agents may be selected from those commonly used for the sulphur cross-linking of diene elastomers. It is also possible to add activating agents such as stearic acid, zinc compounds such as ZnO and ZnCO₃, and zinc salts of fatty acids.

The sulphur-based cross-linking system may comprise at least one accelerator which is highly active even at relatively low temperatures (known as an ultra-accelerator), selected for example from: dithiocarbamates, thiurams, thiazoles, and mixtures thereof.

Examples of ultra-accelerators which can be used according to the present invention are zinc N-phenyl-N-ethyl-dithiocarbamate, zinc N,N-dimethyl-dithiocarbamate, zinc N,N-diethyl-dithio-carbamate, 2-mercapto-benzothiazole (MBT), 2-mercapto-benzothiazole disulphide (MBTS), N-cyclohexyl-2-benzothiazyl sulphenamide (CBS), 2-dicyclohexylbenzo-thiazyl sulphenamide (DCBS), N-tert-butyl-2-benzo-thiazyl sulphenamide (TBBS), N-morpholino-2-benzo-thiazyl sulphenamide (MBS), and N-tert-butyl-dithio-benzothiazole (TBSI).

At least one nitrogen-containing co-accelerator can be added to the crosslinkable elastomeric material, the co-accelerator being selected, for example, from N-cyclohexyl-N-ethylamine or diphenylguanidine (DPG), in an amount generally from 0.25 to 10 phr, and preferably from 0.5 to 8 phr.

Figure 6 is an axonometric view of a tyre 61 equipped with a sensor 62 according to the present invention. Underneath said sensor 62, a conductor 63 (part of an antenna) is positioned. In the present embodiment, the conductor 63 is a linear monopole having the major geometrical axis crossing the circumferential direction of the tyre. The conductor 63 lies on the resilient material forming the damping layer 64 of the present invention, which acts also as insulating material.

The present invention will now be further illustrated by the following examples.

### EXAMPLE 1

An elastomeric composition was prepared by mixing:

| | |
|---|---|
| Butyl® 301 | 80 phr |
| Natural rubber | 20 phr |
| Aromatic oil | 40 phr |
| Carbon Black N660 | 60 phr |
| Sulphur | 3 phr |
| Vulkacit® CZ | 4.5 phr |
| Vulkacit® P extra N | 1.5 phr |
| Vulkacit® D | 1.5 phr |

| | |
|---|---|
| Butyl® 301 (Bayer): butyl rubber with Mooney viscosity ML(1+8) of 51 at 125°C; Vulkacit® CZ (Bayer): accelerator CBS (N-cyclohexyl-2-benzothiazyl-sulphenamide); Vulkacit® P extra N (Bayer): accelerator zinc N-phenyl-N-ethyl-dithiocarbamate; Vulkacit® D (Bayer): co- accelerator DPG (diphenylguanidine). | |

The resulting mixture was vulcanised at 140°C for 20 minutes to yield a resilient material having a Shore A hardness of 33 (measured at 23°C according to ASTM Standard D2240), and an elastic rebound of 23 (measured at 23°C according to ASTM Standard D1054).
A disc of diameter 32 mm and thickness 1.8 mm was obtained from the resilient material.
An assembly was prepared by adhering a pressure and temperature sensor to the disc by means of an adhesive tape Scotch^{®} 300SL HI Strength (3M). The sensor was provided with a signal transmission system, and was of essentially cylindrical shape, with a diameter of approximately 26 mm, a height of 13 mm and a weight of 11 g.

The assembly was inserted into a Pirelli^{®} P6^{®} 205 65 R16 tyre, and adhered onto the inner surface of the tyre in the crown area by means of an adhesive tape Scotch^{®} 300SL HI Strength (3M). The tyre was then fitted onto the rim of a car and inflated to a pressure of 2.2 bar. The car travelled along an asphalt road for approximately 8 hours at an average speed of 100 km/h, with peaks of 150 km/h, at an external air temperature of approximately 28°C. When the tyre was removed from the rim, it was found that the sensor bonded stably to the liner and could be detached only by using mechanical means. The sensor did not suffer any damage.

### EXAMPLE 2

A damping layer formed by a polyurethane gel material obtained by curing Vibrathane^{®} XB 870 (a polyether based diphenyl methane diisocianate, MDI, terminated system, Crompton Chemical) with Vibracure^{®} XA 170(a polyol blend, Crompton Chemical) in the presence of Vibracure^{®} XC 070 (Crompton Chemical) at a temperature of 93°C. The resulting resilient material had a Shore A hardness of 12.5 (measured at 23°C according to ASTM Standard D2240), and an elastic rebound of 50 (measured at 23°C according to ASTM Standard D1054).
An assembly was prepared, adhered to a tyre and tested analogously to what disclosed in Example 1. The sensor did not suffer any damage.

### EXAMPLE 3

A damping layer formed by a polyurethane gel material obtained by curing Vibrathane^{®} XB 870 (Crompton Chemical) with Vibracure^{®} XA 170 (Crompton Chemical) at a temperature of 93°C. The resulting resilient material has a Shore A hardness of 15.6 (measured at 23°C according to ASTM Standard D2240), and an elastic rebound of 32 (measured at 23°C according to ASTM Standard D1054).
An assembly was prepared, adhered to a tyre and tested analogously to what disclosed in Example 1. The sensor did not suffer any damage.

## Claims

1. A tyre (11) having an inner surface (111) of a substantially toroidal shape and provided with at least one monitoring device (3) adhered to the inner surface (111) of the tyre (11), wherein a damping element (4) is interposed between the at least one monitoring device (3) and the inner surface (111) of the tyre (11), **characterized in that** said damping element (4) comprises at least one layer of a resilient material having a Shore A hardness-measured at 23°C according to ASTM Standard D2240-of from 1 to 40, and an elastic rebound-measured at 23°C according to ASTM Standard D1054-lower than 60.

2. The tyre (11) according to claim 1 wherein the resilient material has a Shore A of from 5 to 35.

3. The tyre (11) according to claim 1 wherein the resilient material has an elastic rebound lower than 50.

4. The tyre (11) according to claim 1, wherein at least a first adhesive layer is interposed between the inner surface of the tyre and the damping element (4).

5. The tyre (11) according to claim 1 or 4, wherein at least a second adhesive layer is interposed between the damping element (4) and the monitoring device (3).

6. The tyre (11) according to anyone of the previous claims, wherein the damping element (4) further comprises at least a protective layer which at least partially covers the at least one layer of resilient material.

7. The tyre (11) according to claim 6 wherein the protective layer has a value of stress at break of at least 30 MPa.

8. The tyre (11) according to claim 7 wherein the protective layer has a value of stress at break of at least 40 MPa.

9. The tyre (11) according to claim 6 wherein the protective layer has a value of elongation at break of at least 400%.

10. The tyre (11) according to claim 9 wherein the protective layer has a value of elongation at break of at least 500%.

11. The tyre (11) according to claim 6 wherein the protective layer has load values lower than 10 MPa up to an elongation of about 300%.

12. The tyre (11) according to claim 1 wherein the monitoring (3) device includes an antenna.

13. The tyre (11) according to claim 12 wherein the antenna is a linear dipole or monopole.

14. The tyre (11) according to claim 12 wherein the antenna has its major geometrical axis crossing the circumferential direction of the tyre.

15. A method for installing a monitoring device (3) on a tyre (11) having an inner surface (111) of substantially toroidal shape, the method comprising:
selecting a portion of the inner surface (111) of the tyre (11) where the monitoring device (3) is intended to be installed;
adhering the monitoring device (3) to the selected portion;
**characterized in that** a damping element (4) comprising at least one layer of a resilient material having a Shore A hardness - measured at 23°C according to ASTM Standard D2240 - of from 1 to 40, and an elastic rebound-measured at 23°C according to ASTM Standard D1054-lower than 60 is interposed between the inner surface (111) of the tyre (11) and the monitoring device (3).

16. A kit for installing a monitoring device (3) onto an inner surface (111) of a tyre (11), comprising:
the monitoring device (3); and
a damping element (4) to be interposed between the monitoring device (3) and the inner surface (111) of the tyre (11), **characterized in that** said damping element (4) comprises at least one layer of a resilient material having a Shore A hardness - measured at 23°C according to ASTM Standard D2240 - of from 1 to 40, and an elastic rebound - measured at 23°C according to ASTM Standard D1054 - lower than 60.

## Patentansprüche

1. Reifen (11) mit einer Innenfläche (111), die im Wesentlichen eine Torosform hat und mit wenigstens einer an der Innenfläche (111) des Reifens (11) haftend befestigten Überwachungsvorrichtung (3) versehen ist, wobei zwischen der wenigstens einen Überwachungsvorrichtung (3) und der Innenfläche (111) des Reifens (11) ein Dämpfungselement (4) angeordnet ist, **dadurch gekennzeichnet, dass** das Dämpfungselement (4) wenigstens eine Schicht aus einem elastischen Material aufweist, das eine bei 23°C nach ASATM Standard D2240 gemessene Shore- A-Härte von 1 bis 40 und eine bei 23°C nach ASTM Standard D1054 gemessene elastische Rückfederung von weniger als 60 hat.

2. Reifen (11) nach Anspruch 1, bei welchem das elastische Material eine Shore-A-Härte von 5 bis 35 hat.

3. Reifen (11) nach Anspruch 1, bei welchem das elastische Material eine elastische Rückfederung von weniger als 50 hat.

4. Reifen (11) nach Anspruch 1, bei welchem wenigstens eine erste Klebstoffschicht zwischen der Innenfläche des Reifens und dem Dämpfungselement (4) angeordnet ist.

5. Reifen (11) nach Anspruch 1 oder 4, bei welchem wenigstens eine zweite Klebstoffschicht zwischen dem Dämpfungselement (4) und der Überwachungsvorrichtung (3) angeordnet ist.

6. Reifen (11) nach einem der vorhergehenden Ansprüche, bei welchem das Dämpfungselement (4) weiterhin wenigstens eine Schutzschicht aufweist, die die wenigstens eine Schicht aus elastischem Material wenigstens teilweise abdeckt.

7. Reifen (11) nach Anspruch 6, bei welchem die Schutzschicht einen Bruchspannungswert von wenigstens 30 MPa hat.

8. Reifen (11) nach Anspruch 7, bei welchem die Schutzschicht einen Bruchspannungswert von wenigstens 40 MPa hat.

9. Reifen (11) nach Anspruch 6, bei welchem die Schutzschicht einen Bruchdehnungswert von wenigstens 400% hat.

10. Reifen (11) nach Anspruch 9, bei welchem die Schutzschicht einen Bruchdehnungswert von wenigstens 500% hat.

11. Reifen (11) nach Anspruch 6, bei weichem die Schutzschicht Belastungswerte von weniger als 10 MPa bis zu einer Dehnung von etwa 300% hat.

12. Reifen (11) nach Anspruch 1, bei welchem die Überwachungsvorrichtung (3) eine Antenne aufweist.

13. Reifen (11) nach Anspruch 12, bei welchem die Antenne ein linearer Dipol oder ein Monopol ist.

14. Reifen (11) nach Anspruch 12, bei welchem die geometrische Hauptachse der Antenne die Umfangsrichtung des Reifens kreuzt.

15. Verfahren zum Installieren einer Überwachungsvorrichtung (3) an einem Reifen (11), der eine Innenfläche (111) hat, die im Wesentlichen torosförmig ist, wobei bei dem Verfahren
- ein Abschnitt der Innenfläche (111) des Reifens (11) ausgewählt wird, an dem die Überwachungsvorrichtung (3) installiert werden soll, und
- die Überwachungsvorrichtung (3) an dem ausgewählten Abschnitt haftend befestigt wird,
**dadurch gekennzeichnet,**
- **dass** zwischen der Innenfläche (111) des Reifens (11) und der Überwachungsvorrichtung (3) ein Dämpfungselement (4) angeordnet wird, das wenigstens eine Schicht aus einem elastischen Material aufweist, welches
-- gemessen bei 23°C nach ASTM Standard D 2240 eine Shore-A-Härte von 1 bis 40 und
-- gemessen bei 23°C nach ASTM Standard D 1054 eine elastische Rückfederung von weniger als 60 hat.

16. Bausatz zum Installieren einer Überwachungsvorrichtung (3) an einer Innenfläche (111) eines Reifens (11)
- mit einer Überwachungsvorrichtung (3) und
- mit einem Dämpfungselement (4) für die Anordnung zwischen der Überwachungsvorrichtung (3) und der Innenfläche (111) des Reifens (11)
**dadurch gekennzeichnet,**
- **dass** das Dämpfungselement (4) wenigstens eine Schicht aus einem elastischen Material aufweist, das
-- gemessen bei 23°C nach ASTM Standard D 2240 eine Shore-A-Härte von 1 bis 40 und
-- gemessen bei 23°C nach ASTM Standard D 1054 eine elastische Rückfede rung von weniger als 60 hat.

## Revendications

1. Pneu (11) ayant une surface intérieure (111) de forme sensiblement toroïdale et pourvu d'au moins un dispositif de surveillance (3) collé sur la surface intérieure (111) du pneu (11), dans lequel un élément amortisseur (4) est intercalé entre ledit au moins un dispositif de surveillance (3) et la surface intérieure (111) du pneu (11), **caractérisé en ce que** ledit élément amortisseur (4) comprend au moins une couche d'un matériau résilient ayant une dureté Shore A - mesurée à 23 °C selon la norme ASTM D2240 - comprise entre 1 et 40, et un rebond élastique - mesuré à 23 °C selon la norme ASTM D1054 - inférieur à 60.

2. Pneu (11) selon la revendication 1, dans lequel le matériau résilient a un Shore A de 5 à 35.

3. Pneu (11) selon la revendication 1, dans lequel le matériau résilient a un rebond élastique inférieur à 50.

4. Pneu (11) selon la revendication 1, dans lequel au moins une première couche adhésive est intercalée entre la surface intérieure du pneu et l'élément amortisseur (4).

5. Pneu (11) selon la revendication 1 ou 4, dans lequel au moins une deuxième couche adhésive est intercalée entre l'élément amortisseur (4) et le dispositif de surveillance (3).

6. Pneu (11) selon l'une quelconque des revendications précédentes, dans lequel l'élément amortisseur (4) comprend en outre au moins une couche protectrice qui couvre au moins partiellement ladite au moins une couche de matériau résilient.

7. Pneu (11) selon la revendication 6, dans lequel la couche protectrice a une valeur de contrainte à la rupture d'au moins 30 MPa.

8. Pneu (11) selon la revendication 7, dans lequel la couche protectrice a une valeur de contrainte à la rupture d'au moins 40 MPa.

9. Pneu (11) selon la revendication 6, dans lequel la couche protectrice a une valeur d'allongement à la rupture d'au moins 400 %.

10. Pneu (11) selon la revendication 9, dans lequel la couche protectrice a une valeur d'allongement à la rupture d'au moins 500 %.

11. Pneu (11) selon la revendication 6, dans lequel la couche protectrice a des valeurs de charge inférieures à 10 MPa jusqu'à un allongement d'environ 300 %.

12. Pneu (11) selon la revendication 1, dans lequel le dispositif de surveillance (3) comprend une antenne.

13. Pneu (11) selon la revendication 12, dans lequel l'antenne est une antenne dipolaire ou unipolaire linéaire.

14. Pneu (11) selon la revendication 12, dans lequel l'axe géométrique principal de l'antenne coupe la direction périphérique du pneu.

15. Procédé d'installation d'un dispositif de surveillance (3) sur un pneu (11) ayant une surface intérieure (111) de forme sensiblement toroïdale, le procédé comprenant les opérations consistant à :
choisir une partie de la surface intérieure (111) du pneu (11) où le dispositif de surveillance (3) doit être installé ;
coller le dispositif de surveillance (3) sur la partie choisie ;
**caractérisé en ce qu'**un élément amortisseur (4) comprenant au moins une couche d'un matériau résilient ayant une dureté Shore A - mesurée à 23 °C selon la norme ASTM D2240 - comprise entre 1 et 40, et un rebond élastique - mesuré à 23 °C selon la norme ASTM D1054 - inférieur à 60 est intercalé entre la surface intérieure (111) du pneu (11) et le dispositif de surveillance (3).

16. Kit pour installer un dispositif de surveillance (3) sur une surface intérieure (111) d'un pneu (11), comprenant :
le dispositif de surveillance (3) ; et
un élément amortisseur (4) à intercaler entre le dispositif de surveillance (3) et la surface intérieure (111) du pneu (11), **caractérisé en ce que** ledit élément amortisseur (4) comprend au moins une couche d'un matériau résilient ayant une dureté Shore A - mesurée à 23 °C selon la norme ASTM D2240 - comprise entre 1 et 40, et un rebond élastique - mesuré à 23 °C selon la norme ASTM D1054 - inférieur à 60.
